Europäisches Patentamt

European Patent Office

Office européen des brevets

(11) Publication number: 0 333 428
A1

## (12) EUROPEAN PATENT APPLICATION

(21) Application number: 89302492.7

(22) Date of filing: 14.03.89

(51) Int. Cl.⁴: G09B 1/20 , G09B 1/14 , A63F 9/08

(30) Priority: 15.03.88 GB 8806065

(43) Date of publication of application:
20.09.89 Bulletin 89/38

(84) Designated Contracting States:
AT BE DE ES FR GB GR IT NL SE

(71) Applicant: McLeish, Alexander Ogilvie
Viewfield
Barry Angus Scotland(GB)

(72) Inventor: McLeish, Alexander Ogilvie
Viewfield
Barry Angus Scotland(GB)

(74) Representative: Jones, Andrée Zena et al
CRUIKSHANK & FAIRWEATHER 19 Royal
Exchange Square
Glasgow, G1 3AE Scotland(GB)

(54) Cylindrical device.

(57) The invention relates to a game or similar amusement device which aims to exercise the users intellect. The device comprises a column of plate-like support members (2) stacked one upon the other each member being capable of rotation about a central axis (4) of the cylinder independently of other members of the column, and being provided with a plurality of information-bearing tiles (8) mounted at regions arranged around the peripheral edge surface thereof, to permit at least one of said regions to be left vacant. Each region of one support member (2) may be brought into juxtaposition with any desired region of an adjacent member (2) and groove means (10,12) are provided to permit a tile (8) mounted at one region to be moved from that region to a juxtaposed vacant or vacated region of an adjacent support member (2) The tiles (8) may display portions of a photograph or drawing, or selected letters of the alphabet if preferred.

FIG.1

FIG.2

Xerox Copy Centre

## CYLINDRICAL DEVICE

The invention relates to a cylindrical device suitable for use in mental recreational activity, as a teaching aid or other intellectual exercises.

The invention provides a cylindrical device for use in the exercise of the human intellect comprising a column of support members stacked one upon the other, each member being capable of rotation about a central axis of the cylinder independently of other members of the column, each member being provided with a plurality of information-bearing tiles mounted at regions arranged around the peripheral edge surface thereof, to permit at least one of said regions to be left vacant, wherein each region of one support member may be brought into juxtaposition with any desired region of an adjacent member and wherein means are provided to permit a tile mounted at one region to be moved from that region to a juxtaposed vacant or vacated region of an adjacent support member, said means comprising an axially extending groove provided at each region and having a mouth dimension smaller than a main internal dimension so as to engage a projection provided on the rear surface of a tile.

Conveniently, each support member may be indexed about the central axis in a step-wise manner to facilitate accurate alignment of grooves of adjacent regions in an axial direction with respect to the cylinder. Conveniently each support member comprises a circular or annular plate member.

As may be appreciated from an example of the device according to the invention to be described below, the provision of each groove centrally of its associated region permits the tile to be moved from a region on one plate member to a vacant region on the adjacent member simply by sliding along the groove of one region into the groove of the adjacent region.

The information displayed on each tile may be selected from letters of the alphabet, numerals, portions of drawings, photographs, line-drawings or may have any desired visual characteristics.

There will now be described with reference to the drawings, an example of a device according to the invention. It will be understood that the description is given by way of example only and not by way of limitation.

In the drawings:-

Figure 1 is a perspective view of a device according to the invention;

Figure 2 is a sectional view of line II-II of Figure 1;

Figure 3 is a fragmentary sectional view on line III-III of Figure 1;

Figure 4 is a side view of a multi-plate device;

Figure 5 shows an alternative arrangement to that shown in Figure 3;

Figure 6 shows an alternative modification in the configuration of a groove of the device, and

Figure 7 shows a tile suitable for use in the arrangement of Figure 6.

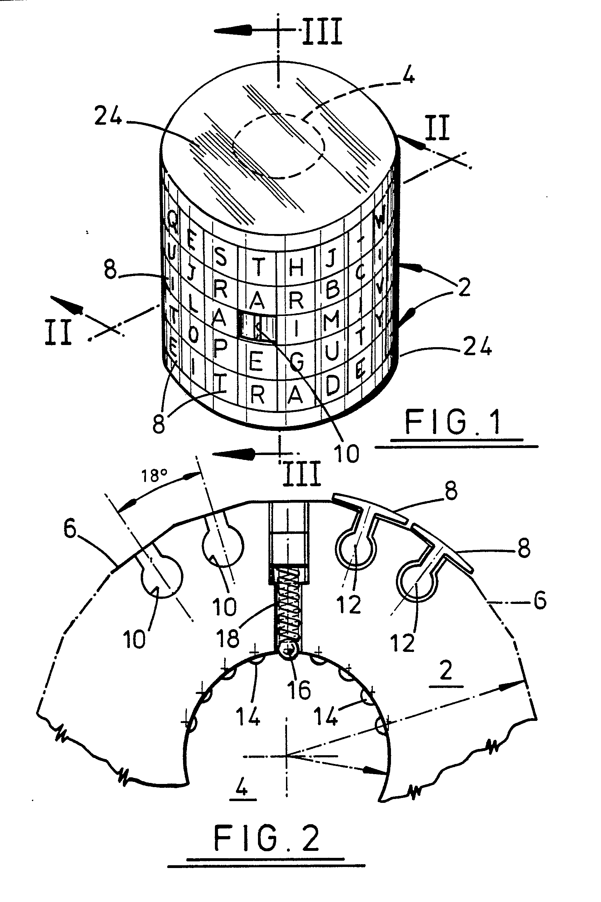

A cylindrical device comprises a column of annular plate members 2 each adapted to rotate about a central body member 4 acting as shaft on the axis of the cylinder. Five plate members are illustrated in Figure 1 but any suitable number may be used as desired.

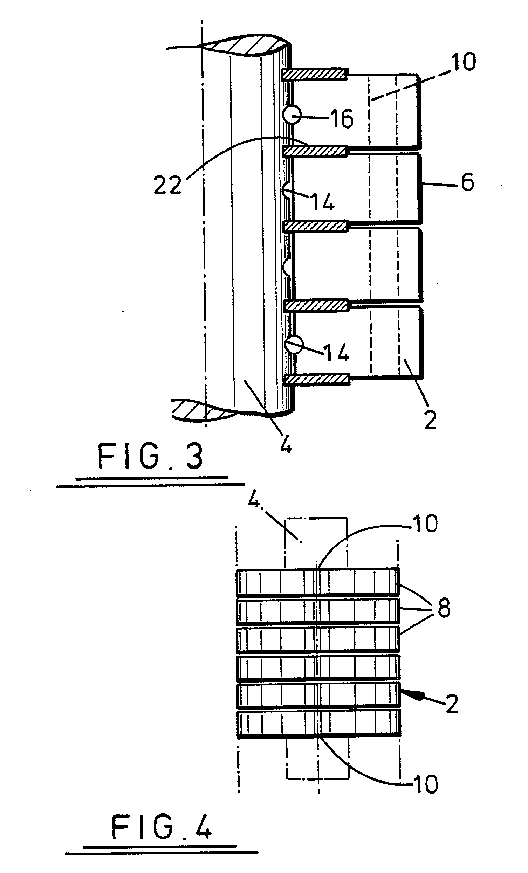

Each plate member 2 shown in Figures 1 - 4 is provided with twenty facets 6 upon its peripheral edge, each facet 6 providing a region at which a tile 8 may be mounted. In the example shown in Figure 1, of the twenty facets on one of the plate members, nineteen have tiles and one is a vacant facet, i.e. no tile positioned thereon.

Each facet 6 is provided with a groove 10 acting as a keyway for a projection 12 provided on the rear of each tile 8.

The central body portion 4 of the device is provided with a number of substantially hemispherical indentations 14 adapted to receive spring-biased projections 16 mounted in the inner edge surface of each plate member. The rotation of the plate members may thus be carried out in a step-wise manner as the members 16, which are biased towards the body portion 4 by the springs 18, are located sequentially in the indentations 14 as the individual plate members 2 are rotated. The plate members are separated from one another by washers or circlips 22 in the present example and are maintained in the required columnar arrangement by circular end plates 24 (Figure 1). Alternatively, end plates of any desired shape may be used, conveniently incorporating a stand device for table top use.

If however, in an alternative example not shown, the plate members are rotatably interlocked with one another so as to form a connected columnar arrangement, then the presence of an end plate may be dispensed with.

Each tile may be provided with a letter as shown in Figures 1 - 4, or any other written symbol, or with lines comprising part of a pictorial representation or cartoon or with a portion of a photograph. In all cases the mental exercise is achieved by movement of the tiles around the cylinder and/or between plate members 2 via the grooves 10 in order to achieve a meaningful representation, picture, system of words for example a crossword, or numerals and the like as appropriate.

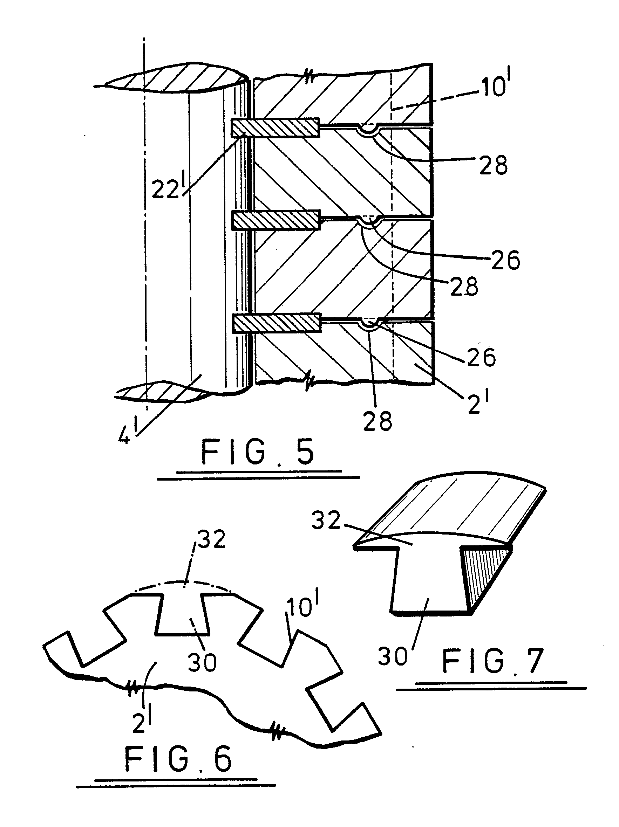

Figure 5 shows a modification of the arrangement described above in which the indexing movement of the plates 2' with respect to one another is provided with spaced, positive stop positions by means of protuberances 26 provided at spaced intervals around the underside of each plate 2' which engage with circular recesses 28 provided in the upper surface of the plate below. This arrangement replaces the spring-biased balls 16 and cooperating recesses 14 as shown in Figure 2, and while the Figure illustates circular or round protuberances, these may be any desired shape, for example having a V-shape cross-section.

While the grooves 10 of Figure 2 are shown as having a circular cross-section with a neck portion, it will be understood that any suitable cross-section may be used. For example, the neck portion may be dispensed with, leaving a circular cross-section groove into which slides a lengthwise extending circular ridge of a tile. Alternatively as shown in Figures 6 and 7, the grooves 10' may be wedge-shaped so that a projection 30 on a tile 32 may dove-tail into the groove. If the external surface 34 of a tile such as 32 is part-cylindrical as in Figure 7, then especially where edges of adjacent tiles abut, the device may then exhibit a smoothly circular outer surface which is particularly advantageous when the information on the tiles forms a unitary picture or photograph. This unitary appearance is further enhanced by the absence of bars or support surfaces which, where these form part of the support members, may be visible between the tiles to the detriment of the appearance of the device.

Various modifications may be made within the scope of the invention as defined in the following claims.

## Claims

1. A cylindrical device for use in the exercise of the human intellect comprising a column of support members stacked one upon the other, each member being capable of rotation about a central axis of the cylinder independently of other members of the column, each member being provided with a plurality of information-bearing tiles mounted at regions arranged around the peripheral edge surface thereof, to permit at least one of said regions to be left vacant, wherein each region of one support member may be brought into juxtaposition with any desired region of an adjacent member and wherein means are provided to permit a tile mounted at one region to be moved from that region to a juxtaposed vacant or vacated region of an adjacent support member, said means comprising an axially extending groove provided at each region and having a mouth dimension smaller than a main internal dimension so as to engage a projection provided on the rear surface of a tile.

2. A device as claimed in claim 1, wherein each support member is indexed about said central axis in a stepwise manner to facilitate accurate alignment of grooves of adjacent regions in an axial direction with respect to the cylinder.

3. A device as claimed in either one of claims 1 and 2, wherein each support member comprises a circular or annular plate member.

4. A device as claimed in any one of the preceding claims, wherein the information displayed on each tile is selected from letters of the alphabet, numerals, portions of drawings, cartoons and photographs.

5. A device as claimed in any one of the preceding claims wherein the external, visible surface of each tile is part-cylindrical about said central axis.

6. A device as claimed in any one of the preceding claims wherein the edges of adjacent tiles abut.

7. A device as claimed in claim 2 wherein the stepwise movement is regulated by the engagement of spaced projections in corresponding recesses.

8. A device as claimed in claim 7, wherein the projections are spring-biased.

9. A device as claimed in claim 7, wherein the projections and recesses are formed on confronting surfaces of adjacent support members.

Neu eingereicht / Newly fi
Nouvellement déposé

FIG.1

FIG.2

EP 0 333 428 A1

Neu eingereicht / Newly file
Nouvellement déposé

FIG. 3

FIG. 4

FIG. 5

FIG. 6

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 227 117 (E. HOFGARTNER)<br>* Page 17, line 1 - page 21, line 29; figures 1-15; claims 1-21 *<br>--- | 1-4,7,9 | G 09 B 1/20<br>G 09 B 1/14<br>A 63 F 9/08 |
| X | WO-A-8 200 101 (GENERALIMPEX HUNGARIAN FOREIGN TRADE CO.)<br>* Page 5, line 28 - page 6, line 10; figures 1-4 *<br>--- | 1-4,7-9 | |
| X | CA-A-1 199 351 (A. RAHMANI)<br>* Page 1, line 26 - page 3, line 5; figures; claims *<br>--- | 1,3,4 | |
| X | GB-A-2 107 997 (KEUN WHA INC.)<br>* Page 2, line 2 - page 5, line 68; figures; claims *<br>--- | 1-4,7,8 | |
| A | EP-A-0 113 705 (D. BRINCAT)<br>* Claim 5; figures *<br>--- | 1,7,8 | |
| A | DE-A-3 309 674 (W. HELD)<br>* Claims; figures *<br>----- | 1,5,6 | TECHNICAL FIELDS SEARCHED (Int. Cl.4)<br><br>G 09 B<br>A 63 F |

The present search report has been drawn up for all claims

| Place of search | Date of completion of the search | Examiner |
|---|---|---|
| THE HAGUE | 25-05-1989 | GORUN M. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.......................................................................
& : member of the same patent family, corresponding
   document

EPO FORM 1503 03.82 (P0401)